# FASCICULE DE BREVET EUROPEEN

(11) **EP 4 745 034 B1**
(45) Date de publication et mention de la délivrance du brevet: **11.11.2026**
(21) Numéro de dépôt: 25183543.5
(22) Date de dépôt: 18.06.2025
(51) Int. Cl.: B64C 25/50, B64C 25/32, B64C 27/04

(54) **AÉRONEF AYANT UN ATTERRISSEUR PIVOTABLE MUNI D'UN SYSTÈME DE VERROUILLAGE EN PIVOTEMENT ET D'UN SYSTÈME DE SURVEILLANCE**
LUFTFAHRZEUG MIT EINEM SCHWENKBAREN FAHRWERK MIT EINEM SCHWENKVERRIEGELUNGSSYSTEM UND EINEM ÜBERWACHUNGSSYSTEM
AIRCRAFT HAVING A PIVOTABLE LANDING GEAR PROVIDED WITH A PIVOTING LOCKING SYSTEM AND A MONITORING SYSTEM

(30) Priorité: 18.11.2024 FR 2412543
(43) Date de publication de la demande: 20.05.2026
(73) Titulaire: Airbus Helicopters, 13725 Marignane Cedex (FR)
(72) Inventeur: ROCHER, Antonin, 13820 ENSUES-LA-REDONNE (FR); BECQUET, Roland, 13590 MEYREUIL (FR); AZZARELLO, Julien, 13001 MARSEILLE (FR); ACHARD, Aurélien, 13127 VITROLLES (FR)
(74) Mandataire: GPI Brevets

(56) Documents cités:
- EP-B1- 0 662 906
- US-A- 2 211 484
- US-A- 2 502 522
- US-A1- 2018 372 535
- US-B1- 11 794 884

## Description

La présente invention concerne un aéronef ayant un atterrisseur pivotable muni d'un système de verrouillage en pivotement et d'un système de surveillance.

Un train d'atterrissage d'un aéronef, et par exemple d'un giravion voire d'un hélicoptère, peut comprendre au moins un atterrisseur pivotable. Un tel atterrisseur pivotable peut comprendre un ensemble portant au moins un organe de contact avec le sol, et pouvant pivoter à 360 degrés autour d'un axe de pivotement afin de faciliter le déplacement de l'aéronef sur le sol. Le terme « sol » désigne par la suite toute surface sur laquelle un aéronef peut se poser, telle qu'une surface terrestre, le toit d'un immeuble, le pont d'un navire...

Par exemple, un giravion tricycle peut comprendre deux atterrisseurs principaux et un atterrisseur auxiliaire comprenant chacun au moins une roue. Les deux atterrisseurs principaux ne sont pas pivotables. En revanche, l'atterrisseur auxiliaire est pivotable pour assurer la manœuvrabilité de l'aéronef au sol. La ou les roues de l'atterrisseur auxiliaire sont, au sol, libres en pivotement autour d'un axe de pivotement qui est distinct du ou des axes de rotation des roues. Sur un hélicoptère muni d'un système de contrôle de l'angle de lacet, et par exemple d'un rotor arrière, un virage peut être entrepris au sol en pilotant la poussée exercée par ce système de contrôle de l'angle de lacet. Le système de contrôle de l'angle de lacet génère un moment sur une cellule de l'aéronef portée par les atterrisseurs, ce moment faisant pivoter automatiquement l'atterrisseur auxiliaire pour orienter l'aéronef dans la direction requise.

Un tel atterrisseur pivotable est néanmoins muni usuellement d'un système de verrouillage en pivotement. Le système de verrouillage en pivotement verrouille, sur commande, l'atterrisseur pivotable dans une position prédéterminée générant un déplacement en ligne droite de l'aéronef. La ou les roues de l'atterrisseur pivotable sont alors sensiblement dans l'axe longitudinal de l'aéronef.

Un système de verrouillage en pivotement connu comporte un doigt de verrouillage qui peut pénétrer dans un alésage d'un socle solidaire de l'ensemble pivotant d'un atterrisseur pivotable. De plus, le système de verrouillage en pivotement comporte une bielle élastique connectée au doigt de verrouillage, et reliée à une poignée notamment par une commande à billes. Pour placer le système de verrouillage en pivotement dans un mode déverrouillé, la poignée est manœuvrée par un opérateur pour positionner le doigt de verrouillage en dehors de l'alésage. L'ensemble pivotant est par suite libre de pivoter autour d'un axe de pivotement. Pour verrouiller l'atterrisseur pivotable, la poignée est manœuvrée par un opérateur afin de positionner le doigt de verrouillage dans l'alésage.

Un tel système de verrouillage en pivotement est efficace. Cependant, lorsque l'atterrisseur pivotable est verrouillé, le pilote peut appliquer par erreur une commande en lacet excessive. L'aéronef reste alors stable au sol en raison des efforts aux contacts roue(s)/sol. Néanmoins, si l'équipage déverrouille l'atterrisseur pivotable, cet équilibre est rompu ce qui peut conduire à un mouvement brusque en lacet de l'aéronef. De même, si l'aéronef décolle dans ces conditions, cet équilibre est aussi rompu et sans réaction prompte du pilote l'aéronef entre en rotation selon l'axe de lacet.

Les documents US3375999, CN104210654 A, EP 0 662 906 B1, US 2 502 522 A, US 2 211 484 A, US 11 794 884 B1, et US 2018/372535 A1 sont connus.

La présente invention a alors pour objet de proposer un aéronef ayant un atterrisseur innovant pour limiter les risques d'apparition d'une déstabilisation subite, selon les revendications 1, 4, 5, 6.

L'invention vise ainsi un aéronef muni d'un atterrisseur pivotable muni d'une base et d'un ensemble pivotant portant un organe de contact qui est configuré pour être en contact avec le sol, ledit ensemble pivotant étant mobile en rotation autour d'un axe de pivotement par rapport à la base, ledit atterrisseur pivotable ayant un système de verrouillage en pivotement comprenant un doigt de verrouillage mobile et un passage ménagé dans un socle, le doigt de verrouillage étant en dehors dudit passage dans un mode déverrouillé pour laisser l'ensemble pivotant libre de pivoter par rapport à la base, le doigt de verrouillage étant placé dans un mode verrouillé dans ledit passage pour restreindre ledit pivotement, le doigt de verrouillage étant porté par la base et le socle appartenant à l'ensemble pivotant.

L'aéronef comporte un système de surveillance configuré pour déterminer la présence d'un risque de prise de mouvement en lacet brusque de l'aéronef en cas d'un décollage ou d'un déverrouillage de l'atterrisseur pivotable lorsque le doigt de verrouillage est dans le mode verrouillé au sol, le système de surveillance étant configuré pour émettre vers un système de traitement un signal de risque à la suite d'une détermination de la présence dudit risque de prise de mouvement en lacet brusque.

Le terme « signal » désigne par exemple un signal analogique ou numérique, électrique ou optique, porteur de données.

Ainsi, lorsque le système de verrouillage en pivotement est dans le mode verrouillé, le système de surveillance permet de déterminer si l'aéronef présente un risque de déstabilisation en cas de déverrouillage de l'atterrisseur pivotable ou de décollage, et commande en conséquence un système de l'aéronef pour limiter les risques d'avoir une telle déstabilisation. Le pilote peut éventuellement agir sur les commandes de vol de l'aéronef pour réduire le moment en lacet exercé sur l'aéronef. En conséquence, la manœuvre du pilote permet à l'aéronef de ne plus présenter un risque de prise de mouvement en lacet brusque. Le pilote peut au choix déverrouiller l'atterrisseur et/ou décoller sans risques.

Ainsi, le système de surveillance peut permettre de limiter les risques de déstabilisation de l'aéronef liés à une erreur de pilotage en présence d'un atterrisseur pivotable verrouillé.

L'atterrisseur peut de plus comporter une ou plusieurs des caractéristiques qui suivent, prises seules ou en combinaison.

Selon une possibilité, le système de traitement peut comporter un générateur d'alarme générant une alarme à la suite d'une réception du signal de risque.

Le générateur d'alarme permet de prévenir un équipage de la présence d'un risque de prise de mouvement en lacet brusque.

Selon une possibilité compatible avec les précédentes, le système de traitement peut comporter un inhibiteur maintenant le doigt de verrouillage dans le mode verrouillé à la suite d'une réception du signal de risque.

L'inhibiteur est alors activé automatiquement pour immobiliser le doigt de verrouillage dans le mode verrouillé. Ainsi, un pilote ne peut pas déverrouiller accidentellement l'atterrisseur pivotable alors qu'un risque de déstabilisation est présent. Un pilote peut en revanche réduire le moment de lacet exercé sur l'aéronef. Lorsque la manœuvre du pilote permet à l'aéronef de ne plus présenter le risque de prise de mouvement en lacet brusque, le signal de risque n'est donc plus émis et l'inhibiteur est désactivé. Le pilote peut alors déverrouiller l'atterrisseur pivotable sans risques.

Eventuellement, ledit inhibiteur peut comporter un actionneur d'immobilisation maintenant le doigt de verrouillage dans le mode verrouillé soit par interférence de forme avec le doigt de verrouillage ou avec une commande pilotant un déplacement du doigt de verrouillage, soit en inhibant une telle commande.

Selon une alternative, le doigt de verrouillage peut être rendu mobile par un actionneur électrique. L'inhibiteur peut alors comprendre un organe inhibant cet actionneur électrique, soit au moyen d'une logique électronique implémentée dans l'actionneur électrique soit en coupant une alimentation électrique de cet actionneur électrique par exemple.

Selon une alternative, le doigt de verrouillage peut être rendu mobile par un système mécanique. Dans ce cas, un actionneur dédié peut être utilisé pour freiner ou immobiliser le doigt de verrouillage ou ce système mécanique.

Selon une possibilité compatible avec les précédentes, le système de surveillance peut être configuré pour déterminer ladite présence dudit risque de prise de mouvement en lacet brusque quand une valeur relative à un effort dans le système de verrouillage est supérieure à une limite.

En effet, si l'aéronef est soumis à un moment en lacet important susceptible de générer un risque de prise de mouvement en lacet brusque, alors le système de verrouillage est soumis à un effort important. Un effort de cisaillement exercé par le socle sur le doigt de verrouillage ou un effort exercé par le doigt de verrouillage sur un palier le guidant par exemple tend alors à augmenter jusqu'à dépasser une limite. Cette limite peut être établie par analyse suite à des essais, des tests et/ou des simulations. La limite peut par exemple être déterminée à partir de l'accélération angulaire que subirait l'aéronef en cas de décollage ou de déverrouillage de l'atterrisseur. La limite peut également être établie sur la base d'essais dédiés visant à estimer la capacité d'un pilote à éviter une perte de stabilité en cas de mise en rotation subite en lacet de l'aéronef et en présence de différents niveaux de charge du doigt de verrouillage. La limite peut également être évaluée à partir d'une commande en lacet à appliquer pour contrebalancer les effets de la perte de stabilité.

Si le système de surveillance détermine qu'une valeur variant conjointement avec un tel effort exercé par ou sur le doigt de verrouillage est supérieure à la limite, le système de surveillance en déduit que l'aéronef présente un risque de déstabilisation, et commande en conséquence le système de traitement.

Selon une possibilité compatible avec les précédentes, le système de surveillance peut comporter au moins un senseur pour mesurer ladite valeur et un contrôleur, le senseur émettant vers le contrôleur un signal de mesure porteur de ladite valeur, ledit contrôleur étant configuré pour déterminer si la valeur est supérieure à la limite et générer en conséquence ledit signal de risque.

Dès lors, le système de surveillance comporte au moins un senseur et un contrôleur comparant la valeur mesurée à la limite pour déterminer si le signal de risque doit être émis. Un équipage est ainsi informé de la présence d'un risque de déstabilisation si l'atterrisseur pivotable est déverrouillé ou si l'aéronef décolle.

Eventuellement, une alerte préventive est émise si ladite valeur est comprise entre un seuil prédéterminé et ladite limite.

Selon une possibilité, ledit senseur peut comporter au moins une jauge de contrainte agencée sur le doigt de verrouillage et mesurant ladite valeur, ledit effort étant un effort en cisaillement exercé sur le doigt de verrouillage, plus précisément par le socle.

Ladite valeur relative au dit effort peut être déterminée de manière classique à l'aide d'une ou de plusieurs jauges de contraintes. Selon une autre possibilité, le senseur peut comporter un palier instrumenté guidant ledit doigt de verrouillage et mesurant ladite valeur, ledit effort étant un effort exercé par ledit doigt de verrouillage sur le palier instrumenté.

Dans ce cas, le palier peut comporter au moins une jauge de contrainte pour mesurer de manière classique la valeur relative à l'effort exercé par le doigt de verrouillage sur le palier instrumenté, cet effort étant de fait une image du moment en lacet exercé sur l'aéronef.

Selon une autre possibilité, ledit système de surveillance peut comporter au moins deux microrupteurs d'alarme disposés de part et d'autre du doigt de verrouillage par exemple dans un plan perpendiculaire à l'axe de pivotement, un microrupteur d'alarme étant activé lorsque ladite valeur est supérieure à la limite en présence d'un pivotement de l'ensemble pivotant par rapport à la base selon un sens, chaque microrupteur d'alarme activé émettant un signal d'alarme, le signal d'alarme représentant le signal de risque transmis au système de traitement ou étant transmis à un contrôleur qui émet en conséquence le signal de risque.

Le système de surveillance peut avoir deux microrupteurs d'alarme pour prendre en considération le possible pivotement de l'ensemble pivotant selon deux sens opposés.

Eventuellement, le système peut comprendre deux microrupteurs d'alerte pour générer une alerte préventive avant que le signal d'alarme soit émis.

Selon une autre possibilité, ledit système de surveillance peut comporter un senseur de position mesurant une position courante d'une commande en lacet de l'aéronef et un senseur de vitesse mesurant une vitesse de rotation courante d'un rotor de sustentation de l'aéronef, ledit système de surveillance comportant un contrôleur en communication avec le senseur de position et le senseur de vitesse, le contrôleur étant configuré pour émettre le signal de risque en fonction au moins de ladite position courante et de la vitesse de rotation courante.

En effet, sur un giravion et par exemple un hélicoptère, le risque de perte de contrôle de l'aéronef lors du déverrouillage au sol de l'atterrisseur pivotable ou du décollage peut être identifié en se basant au moins sur la position de la commande en lacet, prise par exemple au niveau d'un palonnier, ainsi que sur la vitesse de rotation du rotor de sustentation. La position courante de la commande en lacet peut être mesurée de manière usuelle, et par exemple exprimée en angle de déflection. De même, la vitesse de rotation courante peut être mesurée de manière usuelle, et par exemple exprimée en pourcentage d'une vitesse de rotation nominale.

Par exemple, ledit contrôleur peut être configuré pour estimer un moment en lacet courant en fonction de ladite position courante et de la vitesse de rotation courante ou en fonction de ladite position courante et de la vitesse de rotation courante ainsi que d'une position d'un organe de pilotage du pas collectif de pales dudit rotor de sustentation mesurée avec un senseur complémentaire, et pour générer ledit signal de risque si le moment en lacet courant est supérieur à un moment limite.

Par exemple, le contrôleur mémorise une loi donnant le moment en lacet courant en fonction de ladite position courante et de la vitesse de rotation courante, et éventuellement aussi de la position de l'organe de pilotage du pas collectif de pales dudit rotor de sustentation. Un tel organe peut prendre la forme d'un levier de pas collectif usuel par exemple. Le terme « loi » désigne ici et par la suite une loi mathématique, un tableau de valeurs, un réseau de neurones ou autres. La loi peut être établie par essais, calculs et/ou simulations par exemple.

Selon un autre exemple, ledit contrôleur est configuré pour déterminer un moment en lacet courant uniquement en fonction de ladite position courante ou en fonction de ladite position courante et d'une position d'un organe de pilotage du pas collectif de pales dudit rotor de sustentation mesurée avec un senseur complémentaire, le contrôleur étant configuré pour générer ledit signal de risque si le moment en lacet courant est supérieur à un moment limite et si conjointement la vitesse de rotation courante est supérieure à un seuil de vitesse prédéterminé.

Dans cette variante simplifiée, le contrôleur prend en compte la position de la commande en lacet, voire la position de l'organe de pilotage du pas collectif de pales dudit rotor de sustentation, pour évaluer le moment en lacet courant, mais ne s'active qu'à partir d'un seuil de vitesse de rotation du rotor.

Selon une possibilité compatible avec les précédentes, ledit aéronef peut comprendre un atterrisseur auxiliaire et deux atterrisseurs principaux, ledit atterrisseur pivotable formant ledit atterrisseur auxiliaire.

L'invention et ses avantages apparaîtront avec plus de détails dans le cadre de la description qui suit avec des exemples donnés à titre illustratif en référence aux figures annexées qui représentent :
la figure 1, un schéma illustrant un giravion selon l'invention,
la figure 2, un schéma illustrant le giravion de la figure 1 en vue de dessus,
la figure 3, un schéma détaillant un exemple d'atterrisseur pivotable selon l'invention ayant un système de verrouillage dans le mode verrouillé,
la figure 4, un schéma détaillant un exemple de système de surveillance selon l'invention,
la figure 5, un schéma détaillant un exemple de système de surveillance selon l'invention,
la figure 6, un schéma détaillant un exemple de système de surveillance selon l'invention,
la figure 7, un schéma détaillant un exemple de système de surveillance selon l'invention,
la figure 8, un schéma détaillant un exemple de système de surveillance selon l'invention, et
la figure 9, un schéma détaillant un exemple de système de surveillance selon l'invention.

Les éléments présents dans plusieurs figures distinctes sont affectés d'une seule et même référence.

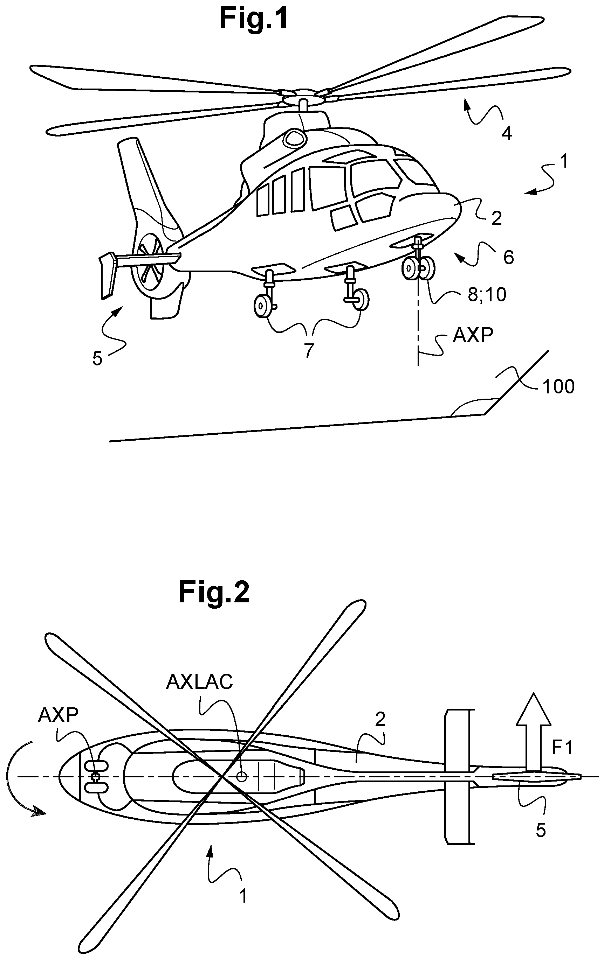

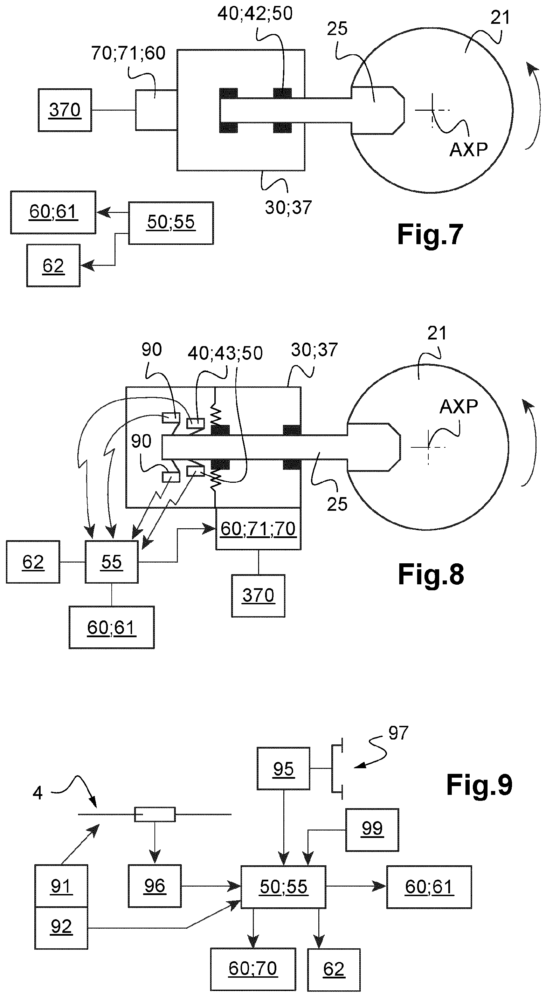

La figure 1 présente un aéronef 1 selon l'invention. Cet aéronef 1 comporte une cellule 2 portant éventuellement au moins un rotor de sustentation 4, à savoir un rotor participant au moins à la sustentation de l'aéronef 1 voire aussi à sa propulsion. En l'occurrence, l'aéronef 1 illustré est un hélicoptère ayant un rotor de sustentation 4 et un système de contrôle du lacet pouvant comprendre un rotor arrière 5. D'autres systèmes de contrôle du lacet sont envisageables, tels que par exemple le système connu sous la marque NOTAR. Le pas collectif des pales du rotor de sustentation 4 peut être piloté par un organe de pilotage 91 illustrée sur la figure 9. La poussée générée par le système de contrôle du lacet peut être pilotée par une commande en lacet 97 illustrée sur la figure 9, tel qu'un palonnier par exemple. En outre, la cellule 2 repose sur un train d'atterrissage 6 comprenant au moins un atterrisseur, à savoir deux atterrisseurs principaux 7 et un atterrisseur auxiliaire 8 selon l'exemple. Indépendamment de la nature de l'aéronef 1, cet aéronef 1 comprend en particulier au moins un atterrisseur 10 pivotable, à savoir l'atterrisseur auxiliaire 8 selon l'exemple.

En référence à la figure 2, lorsque le système de contrôle du lacet exerce une poussée latérale F1, alors l'atterrisseur 10 pivotable effectue au sol une rotation autour d'un axe de pivotement AXP pour modifier l'orientation de l'aéronef 1. L'atterrisseur 10 comporte dès lors un système de verrouillage en pivotement pour garder, dans certaines conditions, l'atterrisseur 10 pivotable sensiblement aligné selon l'axe de déplacement vers l'avant de l'aéronef 1.

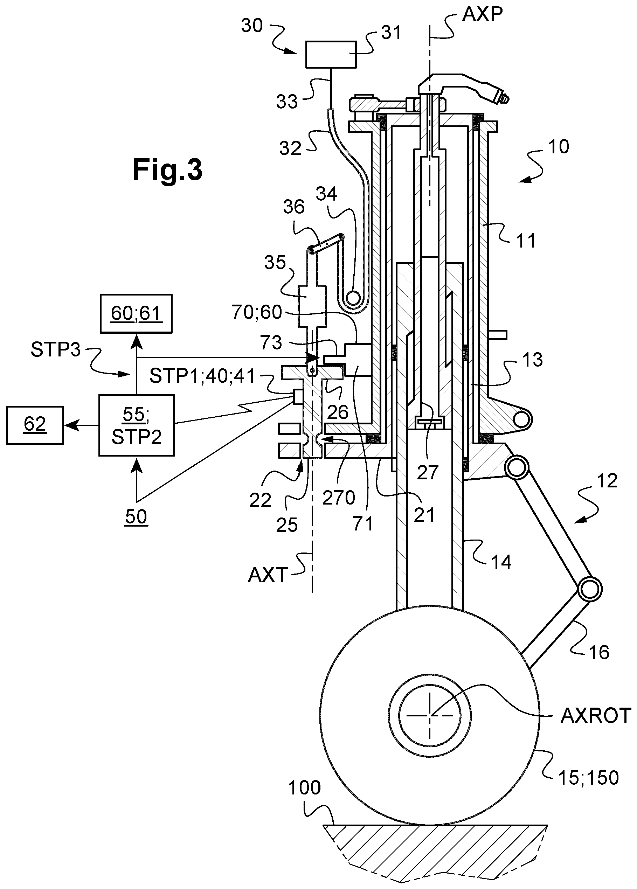

La figure 3 illustre un exemple de réalisation d'un atterrisseur 10 pivotable selon l'invention. Quelle que soit la réalisation, l'atterrisseur 10 est muni d'une base 11, connectée à la cellule 2, et d'un ensemble pivotant 12 pouvant effectuer un pivotement autour d'un axe de pivotement AXP par rapport à la base 11. L'ensemble pivotant 12 porte au moins un organe de contact 15 qui est configuré pour être en contact avec le sol 100. Par exemple, un organe de contact 15 comprend une roue 150 mobile en rotation par rapport à l'ensemble pivotant 12 autour d'un axe de roue AXROT.

La figure 3 donne à titre illustratif un exemple de base 11 et d'ensemble pivotant 12, mais d'autres réalisations de la base 11 et de l'ensemble pivotant 12 sont envisageables. En particulier, la base 11 peut être fixe ou rétractable sans sortir du cadre de l'invention. Selon l'exemple illustré, l'ensemble pivotant 12 peut comprendre un cylindre 13 mobile en rotation autour de l'axe de pivotement AXP par rapport à la base 11. De plus, l'ensemble pivotant 12 comporte un amortisseur 14 porté par le cylindre 13 et logé au moins partiellement dans ce cylindre 13. En outre, un compas 16 est articulé au cylindre 13 et à l'amortisseur 14. Au moins un organe de contact 15 peut être porté par le compas 16 ou l'amortisseur 14 par exemple.

Indépendamment de la manière de réaliser l'ensemble pivotant 12 et la base 11, l'atterrisseur 10 comprend un système 20 de verrouillage en pivotement configuré pour : i) immobiliser l'ensemble pivotant 12 par rapport à la base 11 durant un mode verrouillé MODV, aux jeux de fonctionnement près, et pour ii) autoriser sans limitation un pivotement de l'ensemble pivotant 12 autour de l'axe de pivotement AXP par rapport à la base 11 durant un mode déverrouillé MODDV.

Le système 20 de verrouillage en pivotement comprend un doigt 25 de verrouillage mobile par rapport à un passage 22 ménagé dans un socle 21 pour requérir une application du mode verrouillé MODV. Le doigt 25 de verrouillage est porté par la base 11 et le socle 21 appartient à l'ensemble pivotant 12. Par exemple, le socle 21 forme une pièce monobloc avec le cylindre 13 selon la figure 3. Dès lors, le doigt 25 de verrouillage est en dehors du passage 22 dans le mode déverrouillé MODDV pour laisser l'ensemble pivotant 12 libre en pivotement par rapport à la base 11. En revanche, le doigt 25 de verrouillage est placé dans un mode verrouillé MODV dans le passage 22 pour restreindre ledit pivotement. Selon un autre aspect, le doigt 25 de verrouillage peut comprendre une zone fusible 270 par sécurité.

Pour commander le déplacement du doigt 25 de verrouillage, le système 20 de verrouillage peut comprendre une commande 30. La commande 30 peut comprendre une interface homme-machine 31 manœuvrable par un opérateur pour piloter un système de déplacement. Ce système de déplacement peut comprendre au moins un câble mobile en translation ou par exemple une commande à billes 33, au moins un renvoi 34, une bielle élastique 35, un actionneur 37, ou autres.

Selon la figure 3, le système de déplacement comporte un câble 33 relié à une poignée 31, coulissant dans une gaine 32 et relié par un levier 36 à une bielle élastique 35 connectée au doigt 25 de verrouillage.

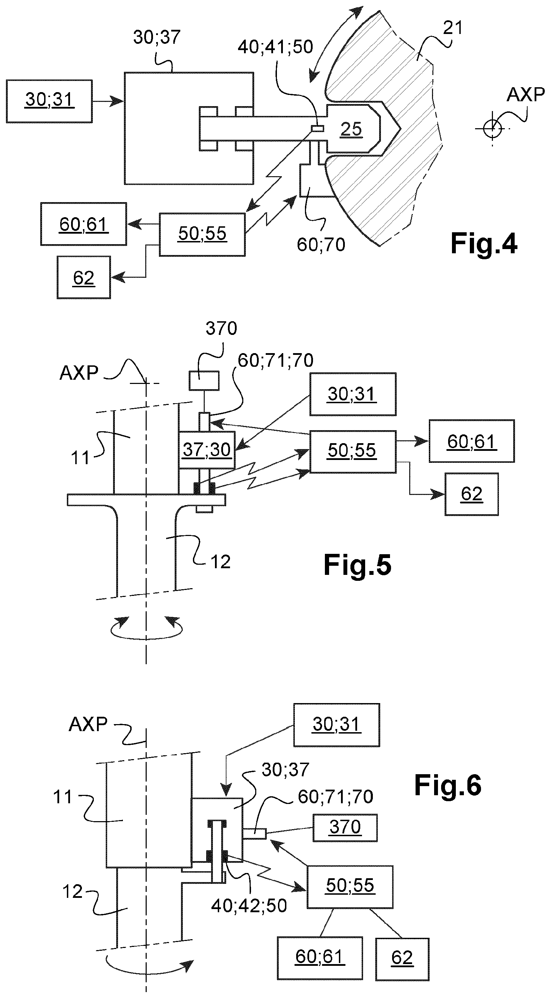

Alternativement et selon les exemples illustrés sur les figures 4 à 8, le système de déplacement comporte une interface homme-machine 31 en communication filaire ou non filaire avec un actionneur électrique 37 apte à déplacer en translation ou en rotation le doigt 25 de verrouillage.

Indépendamment de la manière de déplacer le doigt 25 de verrouillage et en référence à la figure 3, l'aéronef 1 comporte un système de surveillance 50 et un système de traitement 60. Le système de surveillance 50 est configuré pour déterminer la présence d'un risque de prise de mouvement en lacet brusque de l'aéronef 1 en cas d'un décollage ou d'un déverrouillage de l'atterrisseur 10 pivotable lorsque le doigt 25 de verrouillage est dans le mode verrouillé MODV au sol, et pour émettre vers le système de traitement 60 un signal de risque à la suite de la détermination de la présence d'un risque de prise de mouvement en lacet brusque.

Le système de traitement 60 peut comporter un générateur d'alarme 61 lié par une liaison filaire ou non filaire au système de surveillance 50. Le générateur d'alarme 61 a notamment pour fonction de générer une alarme à la suite de la réception du signal de risque. Chaque alarme peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par un individu.

De manière complémentaire ou alternative, le système de traitement 60 peut comporter un inhibiteur 70 lié par une liaison filaire ou non filaire au système de surveillance 50. L'inhibiteur 70 a pour fonction de bloquer sur requête le doigt 25 de verrouillage dans le mode verrouillé MODV. Par exemple, l'inhibiteur 70 comporte un actionneur d'immobilisation 71 apte à maintenir le doigt 25 de verrouillage sur commande dans le mode verrouillé MODV. En présence d'un système de déplacement mécanique notamment, un tel actionneur d'immobilisation 71 peut, par exemple, freiner ou bloquer par interférence de forme le doigt 25 de verrouillage ou un organe de la commande 30 mettant en mouvement ce doigt 25 de verrouillage. En présence d'un doigt 25 de verrouillage piloté par un actionneur de verrouillage, l'actionneur d'immobilisation 71 peut inhiber cet actionneur de verrouillage, par exemple en ayant un relais coupant électriquement une ligne d'alimentation électrique dans le cadre d'un actionneur de verrouillage électrique ou en fermant une vanne alimentant un actionneur de verrouillage hydraulique.

Selon un autre aspect, l'aéronef 1 peut comprendre un générateur d'alerte 62 en communication filaire ou non filaire avec le système de surveillance 50. Le système de surveillance 50 est alors configuré pour générer et transmettre au générateur d'alerte 62 un signal d'alerte avant l'émission du signal de risque. Le générateur d'alerte 62 émet alors une alerte en conséquence. Chaque alerte peut prendre la forme d'une alerte visuelle, par exemple par le biais de l'émission d'une lumière avec une diode électroluminescente ou un équivalent ou de l'affichage sur un écran d'un ou plusieurs caractères, d'une alerte sonore, par le biais d'un haut-parleur, et/ou d'une alerte haptique, par exemple à l'aide d'une unité vibrante faisant vibrer un organe tenu ou porté par un individu. Le générateur d'alerte 62 et le générateur d'alarme 61 peuvent former un seul et même équipement, éventuellement susceptible d'assurer d'autres fonctions.

Pour générer le signal de risque, voire le signal d'alerte, selon les figures 3 à 8 le système de surveillance 50 est configuré pour évaluer durant une étape STP1 une valeur relative à un effort dans le système 20 de verrouillage par rapport à une limite. Ainsi, le système de surveillance 50 est configuré pour déterminer ladite présence dudit risque de prise de mouvement en lacet brusque quand ladite valeur est supérieure à une limite, et éventuellement pour générer une alerte si cette valeur est comprise entre un seuil et cette limite.

Ainsi, selon les exemples des figures 3 à 7, le système de surveillance 50 peut comporter au moins un senseur 40 pour mesurer ladite valeur et un contrôleur 55. Le senseur 40 émet vers le contrôleur 55 un signal de mesure porteur de ladite valeur, le contrôleur 55 déterminant si la valeur est supérieure à la limite et générant en conséquence ledit signal de risque, voire pour déterminer si la valeur est comprise entre le seuil et cette limite et générer alors le signal d'alerte.

Par senseur, on entend ici un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ce ou ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

En outre, le contrôleur 55 comporte une unité de traitement. L'expression « unité de traitement » désigne dans la description un organe pouvant comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Ainsi, selon l'exemple de la figure 3, le système de surveillance 50 peut comprendre un senseur 40 muni d'au moins une jauge de contrainte 41 agencée sur le doigt 25 de verrouillage. Dans le cas illustré, le doigt 25 de verrouillage s'insère dans le passage 22 selon un axe AXT sensiblement parallèle à l'axe de pivotement AXP. Dès lors, une jauge de contrainte 41 peut être placée sur un ou plusieurs des côtés du doigt 25 de verrouillage. Chaque jauge de contrainte 41 communique alors avec le contrôleur 55 qui est configuré pour émettre vers le système de traitement 60 un signal de risque signalant un risque de perte de stabilité lorsque la valeur de mesure VM mesurée avec le senseur 40 dépasse une limite LIM mémorisée.

Quelle que soit la nature du senseur, la figure 3 illustre la possibilité d'avoir un inhibiteur 70 muni d'un actionneur d'immobilisation 71 électrique ou autre mettant en mouvement un doigt d'immobilisation 73 apte à bloquer le doigt 25 de verrouillage par interférence de forme dans la position verrouillée. Par exemple, le doigt d'immobilisation 73 est en contact avec un épaulement du doigt 25 de verrouillage lorsque l'inhibiteur 70 est actif pour empêcher le retrait du doigt 25 de verrouillage en dehors du passage 22.

La figure 4 illustre un senseur 40 et un inhibiteur 70 du même type que sur la figure 3. En revanche, la figure 4 illustre la possibilité d'introduire le doigt 25 de verrouillage radialement dans le passage 22, au regard de l'axe de pivotement AXP, contrairement à la figure 3. Dans ce cas, la jauge de contrainte 41 peut être placée sur le dessus ou le dessous du doigt 25 de verrouillage pour mesurer une valeur image de l'effort de cisaillement repris par le doigt 25 de verrouillage. La figure 4 illustre aussi une commande 30 munie d'une interface 31 pilotant un actionneur électrique 37 pour déplacer le doigt 25 de verrouillage.

Selon l'exemple de la figure 5, un inhibiteur 70 est muni d'un actionneur d'immobilisation 71 inhibant un actionneur électrique 37 de verrouillage de la commande 30. Selon l'exemple illustré, l'actionneur d'immobilisation 71 isole à cet effet électriquement l'actionneur électrique 37 de la source d'alimentation électrique 370 qui l'alimente électriquement.

Selon l'exemple de la figure 6, le senseur 40 peut comprendre un palier instrumenté 42 guidant le doigt 25 de verrouillage, le palier instrumenté 42 comprenant au moins une jauge de contrainte 41 mesurant une valeur image de l'effort exercé par le doigt 25 de verrouillage sur ce palier instrumenté 42. Quelle que soit la nature du senseur, la figure 6 illustre la possibilité d'avoir un inhibiteur 70 muni d'un actionneur d'immobilisation 71 inhibant un actionneur électrique 37 de la commande.

La figure 7 illustre une variante équivalente munie d'un doigt 25 de verrouillage qui s'insère dans le passage du support 21 radialement, au regard de l'axe de pivotement AXP, contrairement à la figure 6.

Selon l'exemple de la figure 8, le senseur 40 peut comporter deux microrupteurs d'alarme 43 disposés de part et d'autre du doigt 25 de verrouillage, et dans un plan perpendiculaire à l'axe de pivotement AXP dans l'exemple représenté. Eventuellement, le système de surveillance 50 peut aussi comprendre deux microrupteurs d'alerte 90 disposés de part et d'autre du doigt 25 de verrouillage pour générer une alerte. Les microrupteurs d'alarme 43 peuvent communiquer avec un contrôleur 55 qui pilote le système de traitement 60, ou peuvent transmettre directement des signaux au système de traitement 60. De même, les microrupteurs d'alerte 90 peuvent communiquer avec le contrôleur 55, ou transmettre directement des signaux au générateur d'alerte 62.

Selon une autre alternative décrite sur la figure 9, le système de surveillance 50 comporte un senseur de position 95 mesurant une position courante d'une commande en lacet 97 de l'aéronef 1 et un senseur de vitesse 96 mesurant une vitesse de rotation courante d'un rotor de sustentation 4 de l'aéronef 1, voire un senseur complémentaire 92 mesurant une position actuelle d'un organe de pilotage 91 du pas collectif de pales dudit rotor de sustentation 4. Le système de surveillance 50 peut comprendre un senseur de détection 99 pour évaluer si l'aéronef est au sol, par exemple en évaluant une pression dans l'atterrisseur 10 ou une position de l'atterrisseur. Le système de surveillance 50 comporte un contrôleur 55 en communication avec le senseur de position 95 et le senseur de vitesse 96, voire le senseur de détection 99 et le senseur complémentaire 92. Le contrôleur 55 est alors configuré pour émettre le signal de risque en fonction de ladite position courante et de la vitesse de rotation courante, voire du signal émis par le senseur de détection 99 et/ou de la position de l'organe de pilotage 91, afin d'émettre le signal de risque lorsque l'aéronef 1 est au sol. Selon une variante, le contrôleur 55 détermine, à l'aide d'une loi mémorisée par exemple, un moment en lacet courant en fonction de ladite position courante de la commande en lacet 97 et de la vitesse de rotation courante, voire de la position de l'organe de pilotage 91. Dès lors, le contrôleur 55 génère le signal de risque si le moment en lacet courant est supérieur à un moment limite mémorisé, voire si conjointement le senseur de détection 99 émet une mesure indiquant que l'aéronef est au sol.

Selon une variante, le contrôleur 55 détermine, à l'aide d'une loi mémorisée par exemple, un moment en lacet courant uniquement en fonction de la position courante de la commande en lacet 97 ou en fonction de la position courante de la commande en lacet 97 et de la position de l'organe de pilotage 91. Le contrôleur 55 est alors configuré pour émettre le signal de risque si le moment en lacet courant est supérieur à un moment limite et si conjointement la vitesse de rotation courante est supérieure à un seuil de vitesse prédéterminé, voire si conjointement le senseur de détection 99 émet une mesure indiquant que l'aéronef est au sol.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Il est par exemple possible de mixer les diverses réalisations précitées, en utilisant éventuellement le senseur décrit sur une figure avec l'inhibiteur et/ou la commande décrits sur une autre figure, et/ou en modifiant la position du support et du doigt de verrouillage.

## Revendications

1. Aéronef (1) muni d'un atterrisseur (10) pivotable muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) pivotable ayant un système (20) de verrouillage en pivotement comprenant un doigt (25) de verrouillage mobile et un passage (22) ménagé dans un socle (21), le doigt (25) de verrouillage étant en dehors dudit passage (22) dans un mode déverrouillé (MODDV) pour laisser l'ensemble pivotant (12) libre de pivoter par rapport à la base (11), le doigt (25) de verrouillage étant placé dans un mode verrouillé (MODV) dans ledit passage (22) pour restreindre ledit pivotement, le doigt (25) de verrouillage étant porté par la base (11) et le socle (21) appartenant à l'ensemble pivotant (12),
**caractérisé en ce que** ledit aéronef (1) comporte un système de surveillance (50) configuré pour déterminer la présence d'un risque de prise de mouvement en lacet brusque de l'aéronef (1) en cas d'un décollage ou d'un déverrouillage de l'atterrisseur (10) pivotable lorsque le doigt (25) de verrouillage est dans le mode verrouillé (MODV) au sol, le système de surveillance (50) étant configuré pour émettre vers un système de traitement (60) un signal de risque suite à une détermination de la présence dudit risque de prise de mouvement en lacet brusque, le système de surveillance (50) étant configuré pour déterminer ladite présence dudit risque de prise de mouvement en lacet brusque quand une valeur relative à un effort dans le système (20) de verrouillage est supérieure à une limite, ledit système de surveillance (50) comporte au moins un senseur (40) pour mesurer ladite valeur et un contrôleur (55), le senseur (40) émettant vers le contrôleur (55) un signal de mesure porteur de ladite valeur, ledit contrôleur (55) étant configuré pour déterminer si la valeur est supérieure à la limite et générer en conséquence ledit signal de risque.

2. Aéronef selon la revendication 1,
**caractérisé en ce que** ledit senseur (40) comporte au moins une jauge de contrainte (41) agencée sur le doigt (25) de verrouillage et mesurant ladite valeur, ledit effort étant un effort en cisaillement exercé sur le doigt (25) de verrouillage.

3. Aéronef selon l'une quelconque des revendications 1 à 2,
**caractérisé en ce que** le senseur (40) comporte un palier instrumenté (42) guidant ledit doigt (25) de verrouillage et mesurant ladite valeur, ledit effort étant un effort exercé par ledit doigt (25) de verrouillage sur le palier instrumenté (42).

4. Aéronef (1) muni d'un atterrisseur (10) pivotable muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) pivotable ayant un système (20) de verrouillage en pivotement comprenant un doigt (25) de verrouillage mobile et un passage (22) ménagé dans un socle (21), le doigt (25) de verrouillage étant en dehors dudit passage (22) dans un mode déverrouillé (MODDV) pour laisser l'ensemble pivotant (12) libre de pivoter par rapport à la base (11), le doigt (25) de verrouillage étant placé dans un mode verrouillé (MODV) dans ledit passage (22) pour restreindre ledit pivotement, le doigt (25) de verrouillage étant porté par la base (11) et le socle (21) appartenant à l'ensemble pivotant (12),
**caractérisé en ce que** ledit aéronef (1) comporte un système de surveillance (50) configuré pour déterminer la présence d'un risque de prise de mouvement en lacet brusque de l'aéronef (1) en cas d'un décollage ou d'un déverrouillage de l'atterrisseur (10) pivotable lorsque le doigt (25) de verrouillage est dans le mode verrouillé (MODV) au sol, le système de surveillance (50) étant configuré pour émettre vers un système de traitement (60) un signal de risque suite à une détermination de la présence dudit risque de prise de mouvement en lacet brusque, le système de surveillance (50) étant configuré pour déterminer ladite présence dudit risque de prise de mouvement en lacet brusque quand une valeur relative à un effort dans le système (20) de verrouillage est supérieure à une limite, ledit système de surveillance (50) comporte au moins deux microrupteurs d'alarme (43) disposés de part et d'autre du doigt (25) de verrouillage, un microrupteur d'alarme (43) étant activé lorsque ladite valeur est supérieure à la limite en présence d'un pivotement de l'ensemble pivotant (12) par rapport à la base selon un sens, chaque microrupteur d'alarme activé émettant un signal d'alarme, le signal d'alarme représentant le signal de risque transmis au système de traitement (60) ou étant transmis à un contrôleur (55) qui émet en conséquence le signal de risque.

5. Aéronef (1) muni d'un atterrisseur (10) pivotable muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) pivotable ayant un système (20) de verrouillage en pivotement comprenant un doigt (25) de verrouillage mobile et un passage (22) ménagé dans un socle (21), le doigt (25) de verrouillage étant en dehors dudit passage (22) dans un mode déverrouillé (MODDV) pour laisser l'ensemble pivotant (12) libre de pivoter par rapport à la base (11), le doigt (25) de verrouillage étant placé dans un mode verrouillé (MODV) dans ledit passage (22) pour restreindre ledit pivotement, le doigt (25) de verrouillage étant porté par la base (11) et le socle (21) appartenant à l'ensemble pivotant (12),
**caractérisé en ce que** ledit aéronef (1) comporte un système de surveillance (50) configuré pour déterminer la présence d'un risque de prise de mouvement en lacet brusque de l'aéronef (1) en cas d'un décollage ou d'un déverrouillage de l'atterrisseur (10) pivotable lorsque le doigt (25) de verrouillage est dans le mode verrouillé (MODV) au sol, le système de surveillance (50) étant configuré pour émettre vers un système de traitement (60) un signal de risque suite à une détermination de la présence dudit risque de prise de mouvement en lacet brusque, ledit système de surveillance (50) comporte un senseur de position (95) mesurant une position courante d'une commande en lacet (97) de l'aéronef et un senseur de vitesse (96) mesurant une vitesse de rotation courante d'un rotor de sustentation (4) de l'aéronef, ledit système de surveillance (50) comportant un contrôleur (55) en communication avec le senseur de position (95) et le senseur de vitesse (96), le contrôleur (55) étant configuré pour émettre le signal de risque en fonction au moins de ladite position courante et de la vitesse de rotation courante, ledit contrôleur (55) est configuré pour estimer un moment en lacet courant en fonction de ladite position courante et de la vitesse de rotation courante ou en fonction de ladite position courante et de la vitesse de rotation courante ainsi que d'une position d'un organe de pilotage (91) du pas collectif de pales dudit rotor de sustentation (4) mesurée avec un senseur complémentaire (92), et pour générer ledit signal de risque si le moment en lacet courant est supérieur à un moment limite.

6. Aéronef (1) muni d'un atterrisseur (10) pivotable muni d'une base (11) et d'un ensemble pivotant (12) portant un organe de contact (15) qui est configuré pour être en contact avec le sol (100), ledit ensemble pivotant (12) étant mobile en rotation autour d'un axe de pivotement (AXP) par rapport à la base (11), ledit atterrisseur (10) pivotable ayant un système (20) de verrouillage en pivotement comprenant un doigt (25) de verrouillage mobile et un passage (22) ménagé dans un socle (21), le doigt (25) de verrouillage étant en dehors dudit passage (22) dans un mode déverrouillé (MODDV) pour laisser l'ensemble pivotant (12) libre de pivoter par rapport à la base (11), le doigt (25) de verrouillage étant placé dans un mode verrouillé (MODV) dans ledit passage (22) pour restreindre ledit pivotement, le doigt (25) de verrouillage étant porté par la base (11) et le socle (21) appartenant à l'ensemble pivotant (12),
**caractérisé en ce que** ledit aéronef (1) comporte un système de surveillance (50) configuré pour déterminer la présence d'un risque de prise de mouvement en lacet brusque de l'aéronef (1) en cas d'un décollage ou d'un déverrouillage de l'atterrisseur (10) pivotable lorsque le doigt (25) de verrouillage est dans le mode verrouillé (MODV) au sol, le système de surveillance (50) étant configuré pour émettre vers un système de traitement (60) un signal de risque suite à une détermination de la présence dudit risque de prise de mouvement en lacet brusque, ledit système de surveillance (50) comporte un senseur de position (95) mesurant une position courante d'une commande en lacet (97) de l'aéronef et un senseur de vitesse (96) mesurant une vitesse de rotation courante d'un rotor de sustentation (4) de l'aéronef, ledit système de surveillance (50) comportant un contrôleur (55) en communication avec le senseur de position (95) et le senseur de vitesse (96), le contrôleur (55) étant configuré pour émettre le signal de risque en fonction au moins de ladite position courante et de la vitesse de rotation courante, ledit contrôleur (55) est configuré pour déterminer un moment en lacet courant uniquement en fonction de ladite position courante ou en fonction de ladite position courante et d'une position d'un organe de pilotage (91) du pas collectif de pales dudit rotor de sustentation (4) mesurée avec un senseur complémentaire (92), le contrôleur (55) étant configuré pour générer ledit signal de risque si le moment en lacet courant est supérieur à un moment limite et si conjointement la vitesse de rotation courante est supérieure à un seuil de vitesse prédéterminé.

7. Aéronef selon l'une quelconques des revendications 1 à 6,
**caractérisé en ce que** ledit aéronef (1) comprend un atterrisseur auxiliaire (8) et deux atterrisseurs principaux (7), ledit atterrisseur (10) pivotable formant ledit atterrisseur auxiliaire (8).

8. Aéronef selon l'une quelconques des revendications 1 à 7,
**caractérisé en ce que** le système de traitement (60) comporte un générateur d'alarme (61) générant une alarme à la suite d'une réception du signal de risque.

9. Aéronef selon l'une quelconque des revendications 1 à 8,
**caractérisé en ce que** le système de traitement (60) comporte un inhibiteur (70) maintenant le doigt (25) de verrouillage dans le mode verrouillé (MODV) à la suite d'une réception du signal de risque.

10. Aéronef selon la revendication 9,
**caractérisé en ce que** ledit inhibiteur (70) comporte un actionneur d'immobilisation (71) maintenant le doigt (25) de verrouillage dans le mode verrouillé (MODV) soit par interférence de forme avec le doigt (25) de verrouillage ou avec une commande (30) pilotant un déplacement du doigt (25) de verrouillage, soit en inhibant une telle commande (30).

## Patentansprüche

1. Luftfahrzeug (1) mit einem schwenkbaren Landegestell (10), das eine Basis (11) und eine Schwenkeinheit (12) aufweist, die ein Kontaktelement (15) trägt, das konfiguriert ist, um mit dem Boden (100) in Kontakt zu stehen, wobei die Schwenkeinheit (12) relativ zur Basis (11) um eine Schwenkachse (AXP) drehbar ist, wobei das schwenkbare Landegestell (10) ein Schwenkverriegelungssystem (20) aufweist, das einen beweglichen Verriegelungsfinger (25) und einen in einem Sockel (21) ausgebildeten Durchgang (22) umfasst, wobei sich der Verriegelungsfinger (25) in einem entriegelten Modus (MODDV) außerhalb des Durchgangs (22) befindet, um der Schwenkeinheit (12) die freie Schwenkbewegung relativ zur Basis (11) zu ermöglichen, wobei in einem verriegelten Modus (MODV) der Verriegelungsfinger (25) in dem Durchgang (22) angeordnet ist, um die Schwenkbewegung einzuschränken, wobei der Verriegelungsfinger (25) von der Basis (11) getragen ist und der Sockel (21) zur Schwenkeinheit (12) gehört,
**dadurch gekennzeichnet, dass** das Luftfahrzeug (1) ein Überwachungssystem (50) umfasst, das konfiguriert ist, um das Vorliegen eines Risikos einer plötzlichen Gierbewegung des Luftfahrzeugs (1) im Falle eines Starts oder einer Entriegelung des Landegestells (10) festzustellen, wenn sich der Verriegelungsfinger (25) im Verriegelungsmodus (MODV) am Boden befindet, und das Überwachungssystem (50) konfiguriert ist, um nach Feststellung des Vorliegens des Risikos einer plötzlichen Gierbewegung ein Risikosignal an ein Verarbeitungssystem (60) zu senden, wobei das Überwachungssystem (50) konfiguriert ist, um das Vorliegen des Risikos einer plötzlichen Gierbewegung festzustellen, wenn ein Wert, der sich auf eine Kraft im Verriegelungssystem (20) bezieht, einen Grenzwert überschreitet, wobei das Überwachungssystem (50) mindestens einen Sensor (40) zum Messen dieses Werts und eine Steuerung (55) umfasst, wobei der Sensor (40) ein den besagten Wert übertragendes Messsignal an die Steuerung (55) sendet, und die Steuerung (55) konfiguriert ist, um zu ermitteln, ob der Wert über dem Grenzwert liegt, und entsprechend das besagte Risikosignal zu erzeugen.

2. Luftfahrzeug nach Anspruch 1,
**dadurch gekennzeichnet, dass** der Sensor (40) mindestens einen Dehnungsmessstreifen (41) umfasst, der am Verriegelungsfinger (25) angeordnet ist und den besagten Wert misst, wobei die besagte Kraft eine auf den Verriegelungsfinger (25) ausgeübte Scherkraft ist.

3. Luftfahrzeug nach einem der Ansprüche 1 bis 2,
**dadurch gekennzeichnet, dass** der Sensor (40) ein Messlager (42) umfasst, das den Verriegelungsfinger (25) führt und den besagten Wert misst, wobei die besagte Kraft eine vom Verriegelungsfinger (25) auf das Messlager (42) ausgeübte Kraft ist.

4. Luftfahrzeug (1) mit einem schwenkbaren Landegestell (10), das eine Basis (11) und eine Schwenkeinheit (12) aufweist, die ein Kontaktelement (15) trägt, das konfiguriert ist, um mit dem Boden (100) in Kontakt zu stehen, wobei die Schwenkeinheit (12) relativ zur Basis (11) um eine Schwenkachse (AXP) drehbar ist, wobei das schwenkbare Landegestell (10) ein Schwenkverriegelungssystem (20) aufweist, das einen beweglichen Verriegelungsfinger (25) und einen in einem Sockel (21) ausgebildeten Durchgang (22) umfasst, wobei sich der Verriegelungsfinger (25) in einem entriegelten Modus (MODDV) außerhalb des Durchgangs (22) befindet, um die Schwenkeinheit (12) frei gegenüber der Basis (11) schwingen zu lassen, wobei der Verriegelungsfinger (25) in einem Verriegelungsmodus (MODV) in den Durchgang (22) eingeführt ist, um die Schwenkbewegung einzuschränken, wobei der Verriegelungsfinger (25) von der Basis (11) getragen ist und der Sockel (21) zur Schwenkeinheit (12) gehört,
**dadurch gekennzeichnet, dass** das Luftfahrzeug (1) ein Überwachungssystem (50) umfasst, das konfiguriert ist, um das Vorliegen eines Risikos einer plötzlichen Gierbewegung des Luftfahrzeugs (1) im Falle eines Starts oder einer Entriegelung des Landegestells (10) festzustellen, wenn sich der Verriegelungsfinger (25) im Verriegelungsmodus (MODV) am Boden befindet, wobei das Überwachungssystem (50) konfiguriert ist, um nach Feststellung des Vorliegens des Risikos einer plötzlichen Gierbewegung ein Risikosignal an ein Verarbeitungssystem (60) zu senden, wobei das Überwachungssystem (50) konfiguriert ist, um das Vorliegen des Risikos einer plötzlichen Gierbewegung festzustellen, wenn ein Wert, der sich auf eine Kraft im Verriegelungssystem (20) bezieht, einen Grenzwert überschreitet; wobei das Überwachungssystem (50) mindestens zwei Alarm-Mikroschalter (43) umfasst, die beiderseits des Verriegelungsfingers (25) angeordnet sind, wobei ein Alarm-Mikroschalter (43) aktiviert wird, wenn der besagte Wert bei einer Schwenkbewegung der Schwenkeinheit (12) relativ zur Basis in eine Richtung über dem Grenzwert liegt, wobei jeder aktivierte Alarmmikroschalter ein Alarmsignal aussendet, und das Alarmsignal das an das Verarbeitungssystem (60) übermittelte Risikosignal darstellt oder an eine Steuerung (55) übermittelt wird, die daraufhin das Risikosignal aussendet.

5. Luftfahrzeug (1) mit einem schwenkbaren Landegestell (10) ausgestattet ist, welches eine Basis (11) und eine Schwenkeinheit (12) aufweist, die ein Kontaktelement (15) trägt, das konfiguriert ist, um es mit dem Boden (100) in Kontakt zu stehen, wobei die Schwenkeinheit (12) relativ zur Basis (11) um eine Schwenkachse (AXP) drehbar ist, wobei das schwenkbare Landegestell (10) ein Schwenkverriegelungssystem (20) aufweist, das einen beweglichen Verriegelungsfinger (25) und einen in einem Sockel (21) ausgebildeten Durchgang (22) umfasst, wobei sich der Verriegelungsfinger (25) in einem Entriegelungsmodus (MODDV) außerhalb des Durchgangs (22) befindet, um der Schwenkeinheit (12) freies Schwenken relativ zur Basis (11) zu ermöglichen, wobei der Verriegelungsfinger (25) in einem Verriegelungsmodus (MODV) in den Durchgang (22) eingeführt ist, um die Schwenkbewegung einzuschränken, wobei der Verriegelungsfinger (25) von der Basis (11) getragen ist und der Sockel (21) zur Schwenkeinheit (12) gehört,
**dadurch gekennzeichnet, dass** das Luftfahrzeug (1) ein Überwachungssystem (50) umfasst, das konfiguriert ist, um das Vorliegen eines Risikos einer plötzlichen Gierbewegung des Luftfahrzeugs (1) im Falle eines Starts oder einer Entriegelung des Landegestells (10) festzustellen, wenn sich der Verriegelungsfinger (25) im Verriegelungsmodus (MODV) am Boden befindet, wobei das Überwachungssystem (50) konfiguriert ist, um nach Feststellung des Vorliegens des Risikos einer plötzlichen Gierbewegung ein Risikosignal an ein Verarbeitungssystem (60) zu senden, wobei das Überwachungssystem (50) einen Positionssensor (95), der eine aktuelle Position eines Giersteuerorgans (97) des Luftfahrzeugs misst, und einen Geschwindigkeitssensor (96) umfasst, der eine aktuelle Drehgeschwindigkeit eines Tragrotors (4) des Luftfahrzeugs misst, und das Überwachungssystem (50) eine Steuerung (55) umfasst, die mit dem Positionssensor (95) und dem Geschwindigkeitssensor (96) in Verbindung steht, wobei die Steuerung (55) konfiguriert ist, um das Risikosignal in Abhängigkeit zumindest von der aktuellen Position und der aktuellen Drehzahl auszugeben, und die Steuerung (55) konfiguriert ist, um ein aktuelles Giermoment in Abhängigkeit von der aktuellen Position und der aktuellen Drehzahl oder in Abhängigkeit von der aktuellen Position und der aktuellen Drehzahl sowie einer Position eines Steuerorgans (91) für die kollektive Blattverstellung des Tragrotors (4) zu schätzen, die mit einem zusätzlichen Sensor (92) gemessen wird, und das Risikosignal zu erzeugen, wenn das aktuelle Giermoment größer als ein Grenzwert ist.

6. Luftfahrzeug (1) mit einem schwenkbaren Landegestell (10), welches eine Basis (11) und eine Schwenkeinheit (12) aufweist, die ein Kontaktelement (15) trägt, das konfiguriert ist, um mit dem Boden (100) in Kontakt zu stehen, wobei die Schwenkeinheit (12) relativ zur Basis (11) um eine Schwenkachse (AXP) drehbar ist, wobei das schwenkbare Landegestell (10) ein Schwenkverriegelungssystem (20) aufweist, das einen beweglichen Verriegelungsfinger (25) und einen in einem Sockel (21) ausgebildeten Durchgang (22) umfasst, wobei sich der Verriegelungsfinger (25) in einem Entriegelungsmodus (MODDV) außerhalb des Durchgangs (22) befindet, um die Schwenkeinheit (12) frei relativ zur Basis (11) schwenken zu lassen, wobei der Verriegelungsfinger (25) in einem verriegelten Modus (MODV) in dem Durchgang (22) angeordnet ist, um die Schwenkbewegung einzuschränken, wobei der Verriegelungsfinger (25) von der Basis (11) getragen wird und der Sockel (21) zur Schwenkeinheit (12) gehört,
**dadurch gekennzeichnet, dass** das Luftfahrzeug (1) ein Überwachungssystem (50) umfasst, das konfiguriert ist, um das Vorliegen eines Risikos einer plötzlichen Gierbewegung des Luftfahrzeugs (1) im Falle eines Starts oder einer Entriegelung des Landegestells (10) festzustellen, wenn sich am Boden der Verriegelungsfinger (25) im Verriegelungsmodus (MODV) befindet, wobei das Überwachungssystem (50) konfiguriert ist, um nach Feststellung des Vorliegens des Risikos einer plötzlichen Gierbewegung ein Risikosignal an ein Verarbeitungssystem (60) zu senden, wobei das Überwachungssystem (50) einen Positionssensor (95), der eine aktuelle Position eines Giersteuerorgans (97) des Luftfahrzeugs misst, und einen Geschwindigkeitssensor (96) umfasst, der eine aktuelle Drehzahl eines Tragrotors (4) des Luftfahrzeugs misst, wobei das Überwachungssystem (50) eine Steuerung (55) umfasst, die mit dem Positionssensor (95) und dem Geschwindigkeitssensor (96) in Verbindung steht, wobei die Steuerung (55) konfiguriert ist, um das Risikosignal in Abhängigkeit zumindest von der aktuellen Position und der aktuellen Drehzahl auszugeben, wobei die Steuerung (55) konfiguriert ist, um ein aktuelles Giermoment ausschließlich in Abhängigkeit von der aktuellen Position oder in Abhängigkeit von der aktuellen Position und einer mit einem zusätzlichen Sensor (92) gemessenen Position eines Steuerorgans (91) für die kollektive Blattverstellung des Tragrotors (4) zu ermitteln, wobei die Steuerung (55) konfiguriert ist, um das Risikosignal zu erzeugen, wenn das aktuelle Giermoment größer als ein Grenzmoment ist und gleichzeitig die aktuelle Drehzahl größer als ein vorgegebener Drehzahlschwellenwert ist.

7. Luftfahrzeug nach einem der Ansprüche 1 bis 6,
**dadurch gekennzeichnet, dass** das Luftfahrzeug (1) ein Hilfslandegestell (8) und zwei Hauptlandegestelle (7) umfasst, wobei das schwenkbare Landegestell (10) das Hilfslandegestell (8) bildet.

8. Luftfahrzeug nach einem der Ansprüche 1 bis 7,
**dadurch gekennzeichnet, dass** das Verarbeitungssystem (60) einen Alarmgenerator (61) umfasst, der nach dem Empfang des Risikosignals einen Alarm erzeugt.

9. Luftfahrzeug nach einem der Ansprüche 1 bis 8,
**dadurch gekennzeichnet, dass** das Verarbeitungssystem (60) eine Sperrvorrichtung (70) umfasst, die den Verriegelungsfinger (25) nach dem Empfang des Risikosignals im Verriegelungsmodus (MODV) hält.

10. Luftfahrzeug nach Anspruch 9,
**dadurch gekennzeichnet, dass** der Sperrmechanismus (70) einen Feststellaktuator (71) umfasst, der den Verriegelungsfinger (25) im Verriegelungsmodus (MODV) hält, und zwar entweder durch Formschluss mit dem Verriegelungsfinger (25) oder mit einer Steuerung (30), die eine Bewegung des Verriegelungsfingers (25) steuert, oder durch Sperren einer solchen Steuerung (30).

## Claims

1. Aircraft (1) provided with a pivotable landing gear (10) provided with a base (11) and a pivoting assembly (12) carrying a contact member (15), which is configured to be in contact with the ground (100), said pivoting assembly (12) being rotatable about a pivot axis (AXP) with respect to the base (11), said pivotable landing gear (10) having a pivoting locking system (20) comprising a moveable locking finger (25) and a passage (22) provided in a baseplate (21), the locking finger (25) being outside of said passage (22) in an unlocked mode (MODDV) to leave the pivoting assembly (12) free to pivot with respect to the base (11), the locking finger (25) being placed in a locked mode (MODV) in said passage (22) to restrict said pivoting, the locking finger (25) being carried by the base (11) and the baseplate (21) belonging to the pivoting assembly (12),
**characterised in that** said aircraft (1) comprises a monitoring system (50) configured to determine the presence of a risk of sudden yaw movement of the aircraft (1), in case of a take-off or unlocking of the pivotable landing gear (10), when the locking finger (25) is in the locked mode (MODV) on the ground, the monitoring system (50) being configured to transmit to a processing system (60), a risk signal following a determination of the presence of said risk of sudden yaw movement, the monitoring system (50) being configured to determine said presence of said risk of sudden yaw movement when a value relating to a force in the locking system (20) is greater than a limit, said monitoring system (50) comprises at least one sensor (40) to measure said value and a controller (55), the sensor (40) transmitting to the controller (55), a measurement signal carrying said value, said controller (55) being configured to determine if the value is greater than the limit, and to consequently generate said risk signal.

2. Aircraft according to claim 1,
**characterised in that** said sensor (40) comprises at least one stress gauge (41) arranged on the locking finger (25), and measuring said value, said force being a shear force exerted on the locking finger (25).

3. Aircraft according to any one of claims 1 to 2,
**characterised in that** the sensor (40) comprises an instrumented bearing (42), guiding said locking finger (25) and measuring said value, said force being a force exerted by said locking finger (25) on the instrumented bearing (42).

4. Aircraft (1) provided with a pivotable landing gear (10) provided with a base (11) and a pivoting assembly (12) carrying a contact member (15), which is configured to be in contact with the ground (100), said pivoting assembly (12) being rotatable about a pivot axis (AXP) with respect to the base (11), said pivotable landing gear (10) having a pivoting locking system (20) comprising a moveable locking finger (25) and a passage (22) provided in a baseplate (21), the locking finger (25) being outside of said passage (22) in an unlocked mode (MODDV) to leave the pivoting assembly (12) free to pivot with respect to the base (11), the locking finger (25) being placed in a locked mode (MODV) in said passage (22) to restrict said pivoting, the locking finger (25) being carried by the base (11) and the baseplate (21) belonging to the pivoting assembly (12),
**characterised in that** said aircraft (1) comprises a monitoring system (50), configured to determine the presence of a risk of sudden yaw movement of the aircraft (1), in case of a take-off or unlocking of the pivotable landing gear (10), when the locking finger (25) is in the locked mode (MODV) on the ground, the monitoring system (50) being configured to transmit to a processing system (60), a risk signal following a determination of the presence of said risk of sudden yaw movement, the monitoring system (50) being configured to determine said presence of said risk of sudden yaw movement, when a value relating to a force in the locking system (20) is greater than a limit, said monitoring system (50) comprises at least two alarm microswitches (43) disposed on either side of the locking finger (25), an alarm microswitch (43) being activated when said value is greater than the limit in the presence of a pivoting of the pivoting assembly (12) with respect to the base along one direction, each activated alarm microswitch transmitting an alarm signal, the alarm signal representing the risk signal transmitted to the processing system (60) or being transmitted to a controller (55) which consequently transmits the risk signal.

5. Aircraft (1) provided with a pivoting landing gear (10) provided with a base (11) and a pivoting assembly (12) carrying a contact member (15), which is configured to be in contact with the ground (100), said pivoting assembly (12) being rotatable about a pivot axis (AXP) with respect to the base (11), said pivotable landing gear (10) having a pivoting locking system (20) comprising a moveable locking finger (25) and a passage (22) provided in a baseplate (21), the locking finger (25) being outside of said passage (22) in an unlocked mode (MODDV) to leave the pivoting assembly (12) free to pivot with respect to the base (11), the locking finger (25) being placed in a locked mode (MODV) in said passage (22) to restrict said pivoting, the locking finger (25) being carried by the base (11) and the baseplate (21) belonging to the pivoting assembly (12),
**characterised in that** said aircraft (1) comprises a monitoring system (50), configured to determine the presence of a risk of sudden yaw movement of the aircraft (1) in case of a take-off or an unlocking of the pivotable landing gear (10), when the locking finger (25) is in the locked mode (MODV) on the ground, the monitoring system (50) being configured to transmit to a processing system (60), a risk signal following a determination of the presence of said risk of sudden yaw movement, said monitoring system (50) comprises a position sensor (95) measuring a current position of a yaw control (97) of the aircraft and a speed sensor (96) measuring a current rotation speed of a lift rotor (4) of the aircraft, said monitoring system (50) comprising a controller (55) in communication with the position sensor (95) and the speed sensor (96), the controller (55) being configured to transmit the risk signal as a function at least of said current position and the current rotation speed, said controller (55) is configured to estimate a current yaw moment as a function of said current position and the current rotation speed, or as a function of said current position and the current rotation speed, as well as a position of a control member (91) of the collective pitch of blades of said lift rotor (4), measured with a complementary sensor (92), and to generate said risk signal, if the current yaw moment is greater than a limit moment.

6. Aircraft (1) provided with a pivotable landing gear (10) provided with a base (11) and a pivoting assembly (12) carrying a contact member (15), which is configured to be in contact with the ground (100), said pivoting assembly (12) being rotatable about a pivot axis (AXP) with respect to the base (11), said pivotable landing gear (10) having a pivoting locking system (20) comprising a moveable locking finger (25) and a passage (22) provided in a baseplate (21), the locking finger (25) being outside of said passage (22) in an unlocked mode (MODDV) to leave the pivoting assembly (12) free to pivot with respect to the base (11), the locking finger (25) being placed in a locked mode (MODV) in said passage (22) to restrict said pivoting, the locking finger (25) being carried by the base (11) and the baseplate (21) belonging to the pivoting assembly (12),
**characterised in that** said aircraft (1) comprises a monitoring system (50), configured to determine the presence of a risk of sudden yaw movement of the aircraft (1), in case of a take-off or an unlocking of the pivotable landing gear (10) when the locking finger (25) is in the locked mode (MODV) on the ground, the monitoring system (50) being configured to transmit to a processing system (60), a risk signal following a determination of the presence of said risk of sudden yaw movement, said monitoring system (50) comprises a position sensor (95) measuring a current position of a yaw control (97) of the aircraft and a speed sensor (96) measuring a current rotation speed of a lift rotor (4) of the aircraft, said monitoring system (50) comprising a controller (55) in communication with the position sensor (95) and the speed sensor (96), the controller (55) being configured to transmit the risk signal as a function at least of said current position and the current rotation speed, said controller (55) is configured to determine a current yaw moment only as a function of said current position or as a function of said current position and a position of a control member (91) of the collective pitch of blades of said lift rotor (4), measured with a complementary sensor (92), the controller (55) being configured to generate said risk signal, if the current yaw moment is greater than a limit moment, and if together, the current rotation speed is greater than a predetermined speed threshold.

7. Aircraft according to any one of claims 1 to 6,
**characterised in that** said aircraft (1) comprises an auxiliary landing gear (8) and two main landing gears (7), said pivotable landing gear (10) forming said auxiliary landing gear (8).

8. Aircraft according to any one of claims 1 to 7,
**characterised in that** the processing system (60) comprises an alarm generator (61) generating an alarm following a reception of the risk signal.

9. Aircraft according to any one of claims 1 to 8,
**characterised in that** the processing system (60) comprises an inhibitor (70) holding the locking finger (25) in the locked mode (MODV) following a reception of the risk signal.

10. Aircraft according to claim 9,
**characterised in that** said inhibitor (70) comprises an immobilisation actuator (71) maintaining the locking finger (25) in the locked mode (MODV), either by shape interference with the locking finger (25) or with a control (30) controlling a movement of the locking finger (25), or by inhibiting such a control (30).
